Europäisches Patentamt

European Patent Office

Office européen des brevets

(11) Veröffentlichungsnummer: **0 001 815**
A1

(12) **EUROPÄISCHE PATENTANMELDUNG**

(21) Anmeldenummer: 78101250.5

(22) Anmeldetag: 28.10.78

(51) Int. Cl.²: **B 23 K 9/10**

(30) Priorität: 02.11.77 DE 2749087

(43) Veröffentlichungstag der Anmeldung:
16.05.79 Patentblatt 79/10

(84) Benannte Vertragsstaaten:
BE CH FR GB LU NL SE

(71) Anmelder: Lorch GmbH Schweisstechnik
Talweg 8
D-7130 Mühlacker 3(DE)

(72) Erfinder: Bloch, Herbert
Friedenstrasse 54
D-7157 Murrhardt(DE)

(74) Vertreter: Vogel, Georg
Auenweg 14
D-7141 Schwieberdingen(DE)

(54) Schweissgerät für mehrere Schweissarten.

(57) Die Erfindung betrifft ein Schweissgerät für mehrere Schweissarten, das einen Netztransformator (NTR), einen Gleichrichter (GR), einen Betriebsartwahlschalter (a) umfasst und mit Schweissstromanschlüssen (b) für mehrere Schweissbrenner versehen ist. Durch Anschlüsse für einen MIG/MAG-Schweissbrenner, einen WIG-Schweissbrenner und einen Elektroden-Schweissbrenner und einen Betriebsartwahlschalter (a) mit drei Schaltstellungen lässt das Schweissgerät für MIG/MAG-Schweissung, WIG-Schweissung und Elektrodenschweissung verwenden, wobei durch interne Umschaltungen die Polarität und die Strom-Spannungs-Kennlinie der Schweissspannung automatisch an die ausgewählte Schweissart angepasst werden und nur der Anschluss aktiviert wird, der der ausgewählten Schweissart zugeordnet ist.

Fig.1

EP 0 001 815 A1

Croydon Printing Company Ltd.

- 1 -

## Schweißgerät für mehrere Schweißarten

Die Erfindung betrifft ein Schweißgerät für mehrere Schweißarten mit einem Netztransformator, einem Gleichrichter,
einem Betriebsartwahlschalter und mit Schweißstromanschlüssen für mehrere Schweißbrenner.

Für die gebräuchlichsten Schweißarten, wie die Elektroden-
Schweißung, die MIG/MAG-Schweißung und die WIG-Schweißung,
gibt es besonders ausgebildete Schweißgeräte, die nur auf
die Anforderungen der bestimmten Schweißart abgestimmt
sind.

Es gibt nun verschiedene Betriebe, in denen die verschiedensten Schweißarten zum Einsatz kommen. Es hat daher nicht
an Versuchen gefehlt, die schweißarten-individuellen Schweißgeräte durch kombinierte Schweißgeräte für mehrere Schweißarten zu ersetzen, um den Geräteaufwand zu reduzieren.

Bei diesen schweißarten-individuellen Schweißgeräten ist es auch schon bekannt, für die Einstellung des Schweißstromes eine Thyristor-Steuerschaltung zu verwenden.

Es ist ein kombiniertes Schweißgerät bekannt, das sich für die Elektroden-Schweißung und die WIG-Schweißung eignet. Außerdem ist ein kombiniertes Schweißgerät bekannt, das sich für die Elektroden-Schweißung und die MIG/MAG-Schweißung verwenden läßt. Gerade bei dem letztgenannten Schweißgerät erfordert die Zusammenfassung der beiden Schweißarten eine große und teuere, als Transduktor ausgebildete Drossel. Ein Nachteil dieser bekannten kombinierten Schweißgeräte ist auch, daß sie nur mit Gleichstrom arbeiten.

Es ist Aufgabe der Erfindung, ein Schweißgerät der eingangs erwähnten Art so auszugestalten, daß es für die MIG/MAG-Schweißung, die WIG-Schweißung und die Elektroden-Schweißung eingesetzt werden kann, wobei kein zweiter Netztransformator und keine teuere Transduktor-Drossel benötigt wird und das Gerät absolut schnell und betriebssicher auf die verschiedenen Schweißarten umgeschaltet werden kann.

Diese Aufgabe wird nach der Erfindung dadurch gelöst, daß neben einem gemeinsamen Werkstückanschluß ein Schweißstromanschluß für einen MIG/MAG-Schweißbrenner, ein Schweißstromanschluß für einen WIG-Schweißbrenner und ein Schweißstromanschluß für einen Elektroden-Schweißbrenner vorgesehen sind, daß der Betriebsartwahlschalter in einer ersten Ar-

beitsstellung die Gleichspannung am Ausgang des Gleichrichters mit ihrem Minuspol auf den gemeinsamen Werkstückanschluß und mit ihrem Pluspol auf den Schweißstromanschluß für den MIG/MAG-Schweißbrenner schaltet, daß der Betriebsartwahlschalter in einer zweiten Arbeitsstellung die Gleichspannung am Ausgang des Gleichrichters mit ihrem Pluspol auf den gemeinsamen Werkstückanschluß und mit ihrem Minuspol auf den Schweißstromanschluß für den WIG-Schweißbrenner schaltet, daß der Betriebsartwahlschalter in einer dritten Arbeitsstellung die Gleichspannung am Ausgang des Gleichrichters mit ihrem Pluspol auf den gemeinsamen Werkstückanschluß und mit ihrem Minuspol auf den Schweißstromanschluß für den Elektroden-Schweißbrenner schaltet, daß in den Primärkreis des Netztransformators eine Thyristor-Steuerschaltung eingeschleift ist, daß der Netztransformator mit der Thyristor-Steuerschaltung in der ersten Arbeitsstellung des Betriebsartwahlschalters für die MIG/MAG-Schweißung als Konstant-Stromquelle geschaltet ist und daß der Betriebsartwahlschalter in der zweiten und dritten Arbeitsstellung für die WIG-Schweißung und die Elektroden-Schweißung den Netztransformator und die Thyristor-Steuerschaltung auf eine Stromquelle mit fallender Kennlinie umschaltet.

Mit dieser Auslegung und Wirkung des Betriebsartwahlschalters wird nicht nur die Polarität der Schweißspannung für die bestimmten Schweißarten festgelegt, sondern auch die dafür erforderliche richtige Arbeitskennlinie des einzigen Netztransformators in Verbindung mit der Thyristor-Steuerschaltung vorgegeben. Es ist damit ein universell einsetzbares Schweißgerät geschaffen, an dem nur die gewünschte Betriebsart eingestellt werden muß und das dabei den Anforderungen der so ausgewählten Schweißart entsprechend umgeschaltet wird.

Die Betriebssicherheit des neuen kombinierten Schweißgerätes wird nach einer Ausgestaltung dadurch noch erhöht, daß der Schweißstromanschluß für den MIG/MAG-Schweißbrenner über einen Kontakt des Betriebsartwahlschalters geführt ist, der nur in der ersten Arbeitsstellung durchschaltet, daß der Schweißstromanschluß für den WIG/ Schweißbrenner über einen weiteren Kontakt des Betriebsartwahlschalters geführt ist, der nur in der zweiten Arbeitsstellung durchschaltet, und daß der Schweißstromanschluß für den Elektroden-Schweißbrenner über einen weiteren Kontakt des Betriebsartwahlschalters geführt ist, der nur in der dritten Arbeitsstellung durchschaltet. Es wird also stets nur dem Schweißbrenner für die am Betriebsartwahlschalter eingestellte Schweißart der Schweißstrom zugeführt, wobei in bekannter Weise die Durchschaltung zum Schweißbrenner noch über den Bedienungskontakt am Schweißbrenner erfolgen kann.

Die Einstellung des Netztransformators und der Thyristor-Steuerschaltung als Konstantstromquelle kann nach einer bevorzugten Ausführungsform dadurch erreicht werden, daß in der ersten Arbeitsstellung für MIG/MAG-Schweißung der Betriebsartwahlschalter den Wechselstromeingang des Gleichrichters mit einer ersten Sekundärwicklung des Netztransformators verbindet und daß die Thyristor-Steuerschaltung als Konstantstromregler mit der Primärwicklung des Netztransformators in Reihe geschaltet ist. Die Thyristor-Steuerschaltung wird dabei in Abhängigkeit von einem vorgegebenen Sollwert und dem entnommenen Schweißstrom so gesteuert, daß eine annähernd konstante Schweißspannung abgegeben wird. Da dabei ein kleiner Innenwiderstand der Stromquelle von Vorteil ist, sieht eine weitere Ausgestaltung vor, daß die Primärwicklung und die erste Sekundärwicklung so auf dem Netztransformator aufgebracht sind, daß sie stark miteinander gekoppelt sind.

Die Änderung der Arbeitskennlinie von Netztransformator und Thyristor-Steuerschaltung für die WIG-Schweißung und die Elektroden-Schweißung wird nach einer vorteilhaften Ausgestaltung dadurch ermöglicht, daß in der zweiten Arbeitsstellung für WIG-Schweißung und der dritten Arbeitsstellung für Elektroden-Schweißung der Betriebsartwahlschalter den Wechselstromeingang des Gleichrichters mit einer zweiten Sekundärwicklung des Netztransformators verbindet und daß der Thyristor-Steuerschaltung ein Vorsteuerkreis parallelgeschaltet ist, der im Leerlauf des Netztransformators die maximale Zündspannung an der zweiten Sekundärwicklung einstellt.

Die Umschaltung auf einen Wechselstrom als Schweißstrom bleibt nach einer Weiterbildung dadurch auf die WIG-Schweißung und die Elektroden-Schweißung beschränkt, daß ein zusätzlicher Stromartwahlschalter mit zwei Schaltstellungen vorgesehen ist, daß in der Wechselstrom-Schaltstellung die über Kontakte des Betriebsartwahlschalters in der zweiten und dritten Arbeitsstellung durchgeschaltete Wechselspannung der zweiten Sekundärwicklung mit dem einen Pol auf den gemeinsamen

Werkstückanschluß und dem anderen Pol über zusätzliche Kontakte des Betriebsartwahlschalters wahlweise auf den Schweißstromanschluß für den WIG-Schweißbrenner oder den Schweißstromanschluß für den Elektroden-Schweißbrenner durchschaltbar ist, und daß in der Gleichstrom-Schaltstellung des Stromartwahlschalters die über Kontakte des Betriebsartwahlschalters in der zweiten und dritten Arbeitsstellung durchgeschaltete Wechselspannung der zweiten Sekundärwicklung auf den Wechselstromeingang des Gleichrichters schaltbar ist, wobei die Durchschaltung zu dem gemeinsamen Werkstückanschluß und den Schweißstromanschlüssen für den WIG-Schweißbrenner und den Elektroden-Schweißbrenner aufhebbar ist, der Pluspol der Gleichspannung am Ausgang des Gleichrichters auf den gemeinsamen Werkstückanschluß schaltbar ist und der Minuspol der Gleichspannung über die Kontakte des Betriebsartwahlschalters wahlweise auf den Schweißstromanschluß für den WIG-Schweißbrenner oder den Schweißstromanschluß für den Elektroden-Schweißbrenner durchschaltbar ist.

Die Betriebssicherheit des neuen kombinierten Schweißgerätes läßt sich nach einer weiteren Ausgestaltung dadurch noch wesentlich erhöhen, daß über weitere Kontakte des Betriebsartwahlschalters in der ersten Arbeitsstellung die Steuerschaltung für die MIG/MAG-Schweißung, in der zweiten Arbeitsstellung die Steuerschaltung für die WIG-Steuerung und in der dritten Arbeitsstellung die Steuerschaltung für die Elektrodenschweißung einschaltbar sind. Bedienungs- und Schaltmaßnahmen an dem nicht ausgewählten Schweißbrenner führen daher sicher zu keinen Schaltvorgängen. Die Zuführung von Schweißdraht, von Gas oder Wasser oder dgl. an dem MIG/MAG-Schweißbrenner ist also nur möglich, wenn am Betriebsartwahlschalter diese MIG/MAG-Schweißung ausgewählt ist. Ähnliches gilt auch für die übrigen Schweißbrenner.

Für eine sichere Gaszuleitung bei der MIG/MAG-Schweißung und der WIG-Schweißung ist nach einer Weiterbildung vorgesehen, daß den Steuerschaltungen für die MIG/MAG-Schweißung und die WIG-Schweißung die beiden Steuerspulen eines Zweiwegventils zugeordnet sind, das in Abhängigkeit von der Einschaltung der Steuerschaltung für die MIG/MAG-Schweißung oder der Steuerschaltung für die WIG-Schweißung die Gaszuleitung auf den Gasanschluß für den MIG/MAG-Schweißbrenner oder den Gasanschluß für den WIG-Schweißbrenner durchschaltet. Die Gaszuführung ist damit auch nur zu dem ausgewählten Schweißbrenner vorbereitend freigegeben und muß dann noch in bekannter Weise über die zugehörige Steuerschaltung vom Schweißbrenner aus gesteuert werden.

Der Betriebsartwahlschalter kann nach einer weiteren Ausgestaltung auch mit einer Ausschaltstellung versehen sein und so zur Ein- und Ausschaltung der Wechselstromversorgung des Netztransformators ausgenützt werden. Die Ein- und Ausschaltung ist dabei so gelöst, daß die Reihenschaltung aus Thyristor-Steuerschaltung und Primärwicklung des Netztransformators über Kontakte eines Hauptschützes an die Versorgungswechselspannung anschaltbar ist und daß dieser Hauptschütz in den Arbeitsstellungen des Betriebsart-

- 8 -

wahlschalters direkt und/oder über die darüber angesteuerten Steuerschaltungen für die verschiedenen Schweißarten einschaltbar ist.

Die Handhabung des neuen kombinierten Schweißgerätes läßt sich nach einer Weiterbildung dadurch noch vereinfachen, daß die Schweißstromanschlüsse für die Schweißbrenner als Steckanschlüsse ausgebildet sind und daß die Schweißbrenner mittels den zugeordneten Gegensteckelementen lösbar mit dem Schweißgerät verbindbar sind. An dem Schweißgerät kann dann nur der für die gewünschte Schweißart benötigte Schweißbrenner angesteckt werden.

Um auch bei diesen lösbaren Steckverbindungen eine vollkommene Betriebssicherheit zu erreichen, ist nach einer weiteren Ausgestaltung vorgesehen, daß die Steckanschlüsse für die verschiedenen Schweißbrenner unverwechselbar ausgebildet sind.

Die Erfindung wird anhand eines in den Zeichnungen dargestellten Ausführungsbeispiels näher erläutert. Es zeigen:

Figur 1 einen Stromlaufplan eines kombinierten Schweißgerätes für MIG/MAG-Schweißung, WIG-Schweißung und Elektroden-Schweißung mit den vom Betriebsartwahlschalter und dem Stromartwahlschalter veränderbaren bzw. umschaltbaren Schweißstrom-Versorgungskreisen,

Figur 2  einen Stromlaufplan für die im
Schweißgerät nach Fig. 1 eingesetzte Thyristor-Steuerschaltung,

Figur 3  schematisch ein Schaltbild, das die
Einschaltung der verschiedenen Steuerschaltungen des Schweißgerätes erkennen läßt,

Figur 4  das Arbeitsdiagramm des Schweißgerätes bei der MIG/MAG-Schweißung und

Figur 5  das Arbeitsdiagramm des Schweißgerätes bei der WIG-Schweißung und der Elektroden-Schweißung.

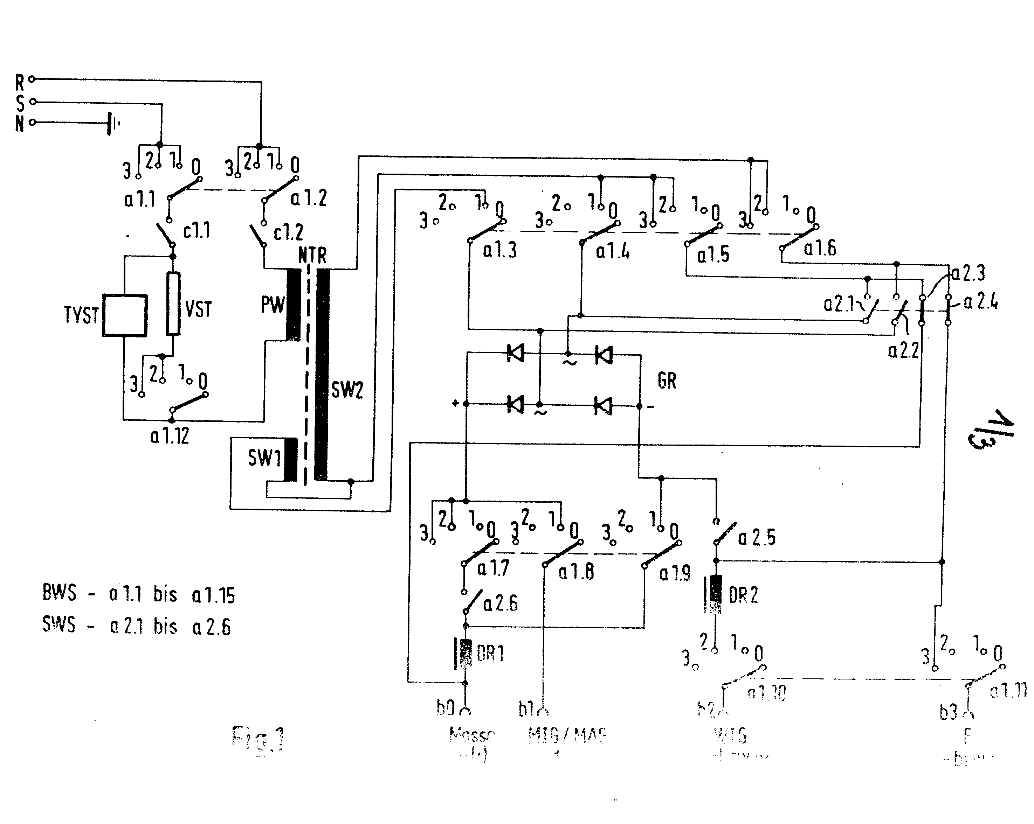

Wie der Stromlaufplan nach Figur 1 zeigt, wird im Ausführungsbeispiel der Netztransformator NTR von den beiden
Phasen R und S eines Drehstromnetzes mit dem Nulleiter
N gespeist, um eine höhere Versorgungswechselspannung
und einen größeren Regelbereich über die Thyristor-Steuerschaltung TYST zu erhalten. Die Primärwicklung PW des Netztransformators NTR ist mit der Thyristor-Steuerschaltung
TYST in Reihe geschaltet und wird über die Kontakte c1.1
und c1.2 eines Hauptschützes sowie die beiden Kontaktbahnen a1.1 und a1.2 des Betriebsartwahlschalters BWS an die
Versorgungswechselspannung angeschaltet. Der Betriebsartwahlschalter BWS hat vier Schaltstellungen, die mit 0,1,
2 und 3 gekennzeichnet sind. Die Stellung 0 ist die Ausschaltstellung, die Stellung 1 ist für die MIG/MAG-Schweissung, die Stellung 2 für die WIG-Schaltung und die Stellung 3 für die Elektroden-Schweißung vorgesehen.

Wie der Figur 3 zu entnehmen ist, enthält das Schweißgerät daher eine Steuerschaltung MIG/MAG-ST für die MIG/MAG-Schweißung, eine Steuerschaltung WIG-ST für die WIG-Schweißung und eine Steuerschaltung E-ST für die Elektroden-Schweißung. Diese Steuerschaltungen werden über einen kleinen Speisetransformator STR gespeist und die Kontaktbahnen a1.13 bis a1.15 des Betriebsartwahlschalters BWS stellen sicher, daß diese Steuerschaltungen jeweils nur dann mit der Speisespannung beaufschlagt werden, wenn die zugeordnete Schweißart am Betriebsartwahlschalter BWS eingestellt ist. Auf diese Weise ist sichergestellt, daß nur der Schweißbrenner für die ausgewählte Schweißart in Betrieb genommen werden kann und daß die jeweils nicht ausgewählten Schweißbrenner vollkommen abgeschaltet sind. Die Bedienungselemente des ausgewählten Schweißbrenners lassen in Verbindung mit der angeschalteten Steuerschaltung dann die Durchführung aller für diese Schweißart erforderlichen Schaltvorgänge usw. zu. Die Handhabung des neuen kombinierten Schweißgerätes ist dadurch einfach und absolut betriebssicher.

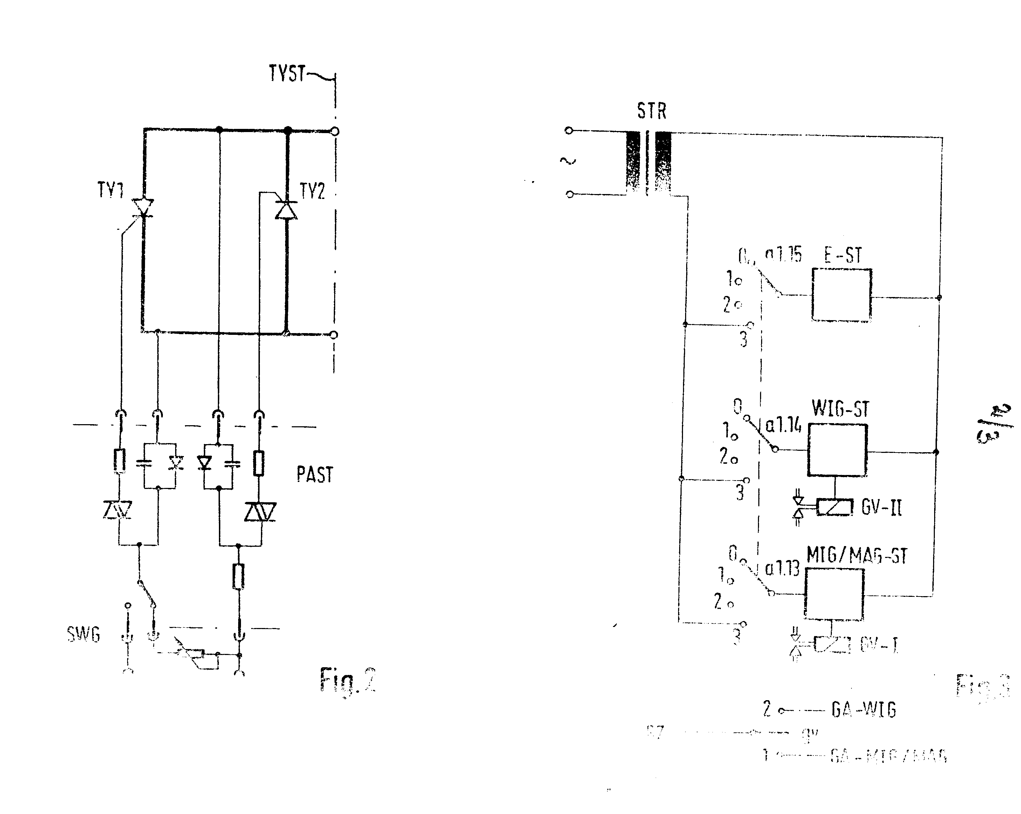

Der Netztransformator NTR weist zwei Sekundärwicklungen SW1 und SW2 auf. Die erste Sekundärwicklung SW1 ist mit der Primärwicklung PW stark gekoppelt, so daß ein kleiner Innenwiderstand der Stromquelle erreicht wird. Diese erste Sekundärwicklung SW1 wird in der ersten Arbeitsstellung (Stellung 1) über die Kontaktbahnen a1.3 und a1.4 des Betriebsartwahlschalters BWS mit dem Wechselstromein-gang des in Graetzschaltung ausgelegten Gleichrichters GR verbunden. Die Gleichspannung am Ausgang des Gleichrichters GR wird über die Kontaktbahnen a1.8 und a1.9 des Betriebsartwahlschalters BWS auf den gemeinsamen Werkstückanschluß bo-Masse und auf den Schweißstromanschluß b1-MIG/MAG geschaltet, so daß das Schweißgerät für die MIG/MAG-Schweißung voreingestellt ist. Dabei liegt der Minuspol der Gleichspannung auf dem gemeinsamen Werkstückanschluß bo-Masse und der Pluspol auf dem Schweißstromanschluß b1-MIG/MAG. Die Thyristor-Steuerschaltung TYST ist mit der Primärwicklung PW des Netztransformators NTR in Reihe geschaltet und wirkt mit diesem zusammen als Konstantstromquelle. Wie der Stromlaufplan nach Figur 2 zeigt, stellt die Thyristor-Steuerschaltung TYST mit den beiden gegensinnig parallelgeschalteten Thyristoren TY1 und TY2 einen regelbaren Vorwiderstand zur Primärwicklung PW des Netztransformators NTR dar, der je nach Größe die Eingangswechselspannung an der Primärwicklung PW des Netztransformators NTR ändert. Der Wert des Widerstandes wird durch den Phasenanschnitt-Steuerkreis PAST bestimmt, der mit den Steuerelektroden der beiden Thyristoren TY1 und TY2 verbunden ist und in Abhängigkeit von der Stroment-nahme gesteuert wird. Über den in den Phasenanschnitt-Steuerkreis PAST einbezogenen Sollwertgeber SWG kann die Thyristor-Steuerschaltung TYST auf einen bestimmten Arbeitsstrom voreingestellt werden, der dann annähernd konstant gehalten wird.

Wie der Stromlaufplan nach Figur 3 erkennen läßt, wird mit der Anschaltung der Steuerschaltung MIG/MAG-ST für die MIG/MAG-Schweißung auch die erste Wicklung GV-I eines Zweiwegventils angesteuert. Dieses Zweiwegventil schaltet dann die von der Gasflasche kommende Gaszuleitung GZ auf den Gasanschluß GA-MIG/MAG für den MIG/MAG-Schweißbrenner. Die Gaszuführung wird dann noch über ein vom MIG/MAG-Schweißbrenner aus steuerbares Ventil freigegeben oder gesperrt. Die Steuerschaltung MIG/MAG-ST für die MIG/MAG-Schweißung enthält außerdem alle Einrichtungen, die für diese Schweißart erforderlich sind, z.B. die Vorschubeinrichtung für den Schweißdraht usw.

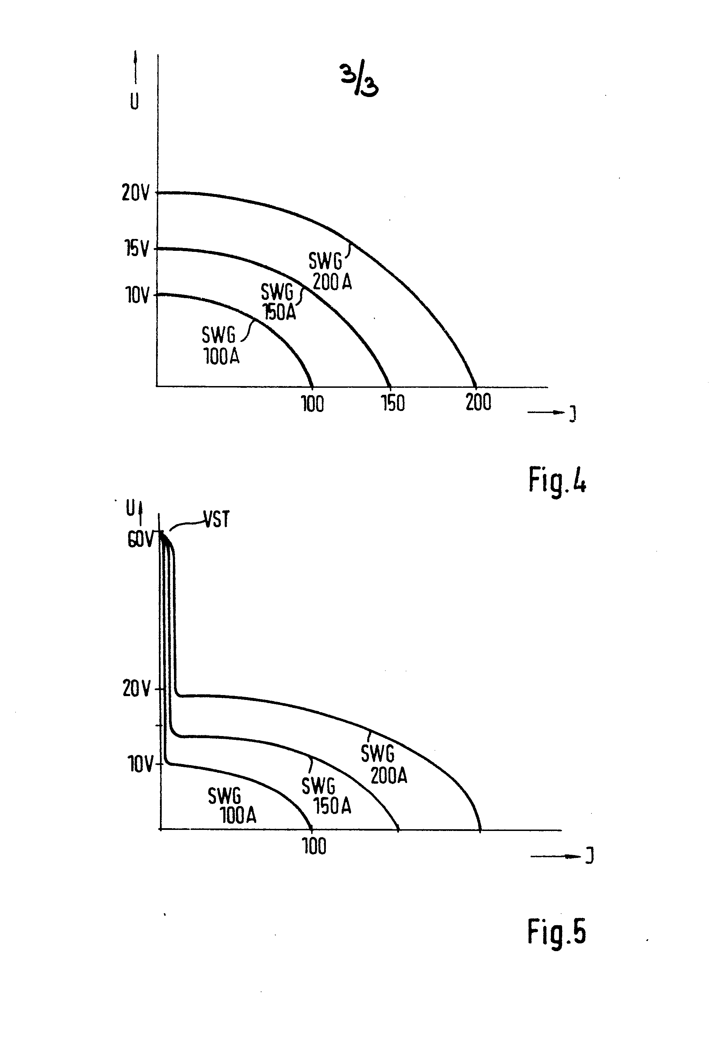

Wie dem Diagramm nach Figur 4 zu entnehmen ist, wird mit dem Sollwertgeber SWG ein bestimmter Schweißstrom, z.B. 100A, 150A oder 200A, vorgegeben, wobei sich demzufolge auch die Leerlauf-Schweißspannung entsprechend einstellt, z.B. 10V, 15 V und 20V. Die Thyristor-Steuerschaltung TYST regelt in Verbindung mit dem Netztransformator NTF mit der einbezogenen Sekundärwicklung SW1 so aus, daß dieser Schweißstrom annähernd konstant gehalten wird.

In der zweiten und der dritten Arbeitsstellung ( Stellungen 2 und 3) des Betriebsartwahlschalters BWS, die für die WIG-Schweißung und die Elektroden-Schweißung vorgesehen sind, wird auf die zweite Sekundärwicklung SW2 umgeschaltet, wie die Kontaktbahnen a1.5 und a1.6 zeigen. Da für diese beiden Schweißarten auch eine Wechselstromschweißung vorgesehen wird, ist ein zusätzlicher Stromartwahlschalter SWS mit den Kontakten a2.1 bis a2.6 erforderlich. Dieser Stromart-

wahlschalter SWS hat zwei Schaltstellungen, eine für die Wechselstrom-Schweißung und eine für die Gleichstrom-Schweißung. In der Figur 1 ist der Stromartwahlschalter SWS in der Schaltstellung für die Wechselstrom-Schweißung eingestellt.

Die Wechselspannung der zweiten Sekundärwicklung SW2 gelangt über die Kontaktbahnen a1.5 und a1.6 des Betriebsartwahlschalters BWS und die Ruhekontakte a2.3 und a2.4 des Stromartwahlschalters SWS mit dem einen Pol direkt zum gemeinsamen Werkstückanschluß bo-Masse und mit dem anderen Pol wahlweise über die Glättungsdrossel DR2 und die Kontaktbahn a1.10 in Stellung 2 zum Schweißstromanschluß b2-WIG für den WIG-Schweißbrenner oder über die Kontaktbahn a1.11 in Stellung 3 direkt zum Schweißstromanschluß b3-E für den Elektroden-Schweißbrenner. Gleichzeitig schaltet aber die Kontaktbahn a1.12 in den Stellungen 2 und 3 den Vorsteuerkreis VST der Thyristor-Steuerschaltung TYST parallel und bewirkt, daß im Leerlauf grundsätzlich die maximale Zündspannung, von z.B. 60 Volt, eingestellt ist, wie das Diagramm nach Fig. 5 erkennen läßt und wie für diese Schweißarten erforderlich ist. Über den Sollwertgeber SWG und den Phasenanschnitt-Steuerkreis PAST wird wieder die Arbeitskennlinie voreingestellt. In dieser Umschaltung stellt die Thyristor-Steuerschaltung TYST und der Netztransformator NTR mit der einbezogenen zweiten Sekundärwicklung SW2 eine Stromquelle mit fallender Kennlinie dar.

Wird der Stromartwahlschalter SWS in die Schaltstellung für die Gleichstrom-Schweißung eingestellt, dann werden alle Kontakte a2.1 bis a2.6 umgeschaltet. Die über die Kontakte a1.5 und a2.6 durchgeschaltete Wechselspannung der Sekundärwicklung SW2 gelangt dann über die Kontakte a2.1 und a2.2 zum Wechselstromeingang des Gleichrichters GR. Der Pluspol der Gleichspannung am Ausgang des Gleichrichters GR wird über die Kontaktbahn a1.7 des Betriebsartwahlschalter BWS in den Stellungen 2 und 3, den geschlossenen Kontakt a2.6 des Stromartwahlschalters SWS und die Glättungsdrossel DR1 auf den gemeinsamen Werkstückanschluß bo-Masse geschaltet. Der Minuspol der Gleichspannung wird über den geschlossenen Kontakt a2.5 des Stromartwahlschalters SWS die Glättungsdrossel DR2 und die Kontaktbahn a1.10 in der Stellung 2 des Betriebsartwahlschalters BWS zum Schweißstromanschluß b2-WIG für den WIG-Schweißbrenner durchgeschaltet, während der Minuspol der Gleichspannung über den geschlossenen Kontakt a2.5 des Stromartwahlschalters SWS und die Kontaktbahn a1.11 in Stellung 3 direkt zum Schweißstromanschluß b3-E für den Elektroden-Schweißbrenner durchgeschaltet wird. Die Thyristor-Steuerschaltung TYST und der Netztransformator NTR mit der Sekundärwicklung SW2 bleiben dabei unberührt als Stromquelle mit fallender Kennlinie geschaltet. Zu beachten ist, daß bei der Gleichstrom-Schweißung dem Schweißstromanschluß sowohl bei der WIG-Schweißung, als auch der Elektroden-Schweißung das Minuspotential der Gleichspannung zugeführt wird, während bei der stets als Gleichstrom-Schweißung durchgeführten MIG/MAG-Schweißung dem Schweißstromanschluß b1-MIG/MAG das Pluspotential der Gleichspannung zugeführt wird.

Die Schaltstellung des Stromartwahlschalters SWS bleibt bei der MIG/MAG-Schweißung ohne Einfluß, da die Kontaktbahnen a1.5 und a1.6 in Stellung 1 den Stromkreis zur Sekundärwicklung SW2 unterbrechen. Bei der MIG/MAG-Schweißung schalten die Kontaktbahnen a1.3 und a1.4 des Betriebsartwahlschalters BWS grundsätzlich die Sekundärwicklung SW1 auf den Wechselstromeingang des Gleichrichters GR und die Kontaktbahnen a1.8 und a1.9 des Betriebsartwahlschalters BWS schalten die beiden Pole der Gleichspannung am Ausgang des Gleichrichters GR mit der richtigen Polung direkt auf den gemeinsamen Werkstückanschluß bo-Masse und den Schweißstromanschluß b1-MIG/MAG für den MIG/MAG-Schweißbrenner. Daran ändert sich auch nichts, wenn der Stromartwahlschalter SWS umgeschaltet wird. Wichtig ist dabei aus Gründen der Betriebssicherheit, daß den Schweißstromanschlüssen direkt eine Kontaktbahn a1.8, a1.10 bzw. a1.11 des Betriebsartwahlschalters BWS vorgeschaltet ist, die jeweils nur in der der Schweißart zugeordneten Arbeitsstellung 1, 2 bzw. 3 durchschaltet.

Es bleibt noch zu erwähnen, daß mit der Ansteuerung der Steuerschaltung WIG-ST für die WIG-Schweißung über die Kontaktbahn a1.14 in Stellung 2 des Betriebsartwahlschalters BWS die zweite Wicklung GV-II des Zweiwegventils angesteuert wird. Das Zweiwegventil schaltet darauf die Gaszuleitung GZ auf den Gasanschluß GA-WIG für den WIG-Schweißbrenner vorbereitend um. Die Freigabe bzw. Sperrung der Gaszuführung erfolgt dann über Schaltmaßnahmen des ausgewählten WIG-Schweißbrenners.

Der Hauptschütz mit seinen Kontakten c1.1 und c1.2 kann über die Steuerschaltungen MIG/MAG-ST, WIG-ST und E-ST angesteuert werden, so daß der Betriebsartwahlschalter
BWS in der Stellung 0 auch gleich als Hauptschalter zum
Ein- und Ausschalten des Schweißgerätes verwendet werden
kann.

0001815

- 1 -

Patentansprüche:

1. Schweißgerät für mehrere Schweißarten mit einem Netztransformator, einem Gleichrichter, einem Betriebsartwahlschalter und mit Schweißstromanschlüssen für mehrere Schweißbrenner, dadurch gekennzeichnet, daß neben einem gemeinsamen Werkstückanschluß (bo, Masse) ein Schweißstromanschluß (b1, MIG/MAG) für einen MIG/MAG-Schweißbrenner, ein Schweißstromanschluß (b2, WIG) für einen WIG-Schweißbrenner und ein Schweißstromanschluß (b3, E) für einen Elektroden-Schweißbrenner vorgesehen sind,
daß der Betriebsartwahlschalter (BWS) in einer ersten Arbeitsstellung (Stellung 1) die Gleichspannung am Ausgang des Gleichrichters (GR) mit ihrem Minuspol (-) auf den gemeinsamen Werkstückanschluß (bo, Masse) und mit ihrem Pluspol (+) auf den Schweißstromanschluß (b1, MIG/MAG) für den MIG/MAG-Schweißbrenner schaltet,
daß der Betriebsartwahlschalter (BWS) in einer zweiten Arbeitsstellung (Stellung 2) die Gleichspannung am Ausgang des Gleichrichters (GR) mit ihrem Pluspol (+) auf den gemeinsamen Werkstückanschluß (bo, Masse) und mit ihrem Minuspol (-) auf den Schweißstromanschluß (b2, WIG) für den WIG-Schweißbrenner schaltet,
daß der Betriebsartwahlschalter (BWS) in einer dritten Arbeitsstellung (Stellung 3) die Gleichspannung am Ausgang des Gleichrichters (GR) mit ihrem Pluspol (+) auf den gemeinsamen Werkstückanschluß (bo, Masse) und mit ihrem Minuspol (-) auf den Schweißstromanschluß (b3, E) für den Elektroden-Schweißbrenner schaltet,
daß in den Primärkreis (PW) des Netztransformators (NTR) eine Thyristor-Steuerschaltung (TYST) eingeschleift ist,

daß der Netztransformator (NTR) mit der Thyristor-Steuerschaltung (TYST) in der ersten Arbeitsstellung (Stellung S1) des Betriebsartwahlschalters (BWS) für die MIG/MAG-Schweißung als Konstant-Stromquelle geschaltet ist und

daß der Betriebsartwahlschalter (BWS) in der zweiten und dritten Arbeitsstellung (Stellung 2 und 3) für die WIG-Schweißung und die Elektroden-Schweißung den Netztransformator (NTR) und die Thyristor-Steuerschaltung (TYST) auf eine Stromquelle mit fallender Kennlinie umschaltet.

2. Schweißgerät nach Anspruch 1, dadurch gekennzeichnet, daß der Schweißstromanschluß (b1, MIG/MAG) für den MIG/MAG-Schweißbrenner über einen Kontakt (a1.8) des Betriebsartwahlschalters (BWS) geführt ist, der nur in der ersten Arbeitsstellung (Stellung 1) durchschaltet,

daß der Schweißstromanschluß (b2, WIG) für den WIG-Schweißbrenner über einen weiteren Kontakt (a 1.10) des Betriebsartwahlschalters (BWS) geführt ist, der nur in der zweiten Arbeitsstellung (Stellung 2) durchschaltet und

daß der Schweißstromanschluß (b3, E) für den Elektroden-Schweißbrenner über einen weiteren Kontakt (a1.11) des Betriebsartwahlschalters (BWS) geführt ist, der nur in der dritten Arbeitsstellung (Stellung 3) durchschaltet.

3. Schweißgerät nach Anspruch 1, dadurch gekennzeichnet, daß in der ersten Arbeitsstellung (Stellung 1) für MIG/MAG-Schweißung der Betriebsartwahlschalter (BWS) den Wechselstromeingang des Gleichrichters (GR) mit einer ersten Sekundärwicklung (SW1) des Netztransformators (NTR) verbindet (a 1.3 und 1 1.4) und daß die Thyristor-Steuerschaltung (TYST) als Konstantstromregler mit der Primärwicklung (PW) des Netztransformators (NTR) in Reihe geschaltet ist.

4. Schweißgerät nach Anspruch 1, dadurch gekennzeichnet, daß die Primärwicklung (PW) und die erste Sekundärwicklung (SW1) so auf dem Netztransformator (NTR) aufgebracht sind, daß sie stark miteinander gekoppelt sind.

5. Schweißgerät nach einem der Ansprüche 1 bis 4, dadurch gekennzeichnet, daß in der zweiten Arbeitsstellung (Stellung 2) für WIG-Schweißung und der dritten Arbeitsstellung (Stellung 3) für Elektroden-Schweißung der Betriebsartwahlschalter (BWS) den Wechselstromeingang des Gleichrichters (GR) mit einer zweiten Sekundärwicklung (SW2) des Netztransformators (NTR) verbindet (a 1.5 und a 1.6) und daß der Thyristor-Steuerschaltung (TYST) ein Vorsteuerkreis (VST) parallelgeschaltet (a 1.12) ist, der im Leerlauf des Netztransformators (NTR) die maximale Zündspannung an der zweiten Sekundärwicklung (SW2) einstellt.

6. Schweißgerät nach einem der Ansprüche 1 bis 5, dadurch gekennzeichnet, daß ein zusätzlicher Stromartwahlschalter (SWS) mit zwei Schaltstellungen vorgesehen ist, daß in der Wechselstrom-Schaltstellung die über Kontakte (a 1.5 und a 1.6) des Betriebsartwahlschalters (BWS) in der zweiten und dritten Arbeitsstellung (Stellung 2 und 3) durchgeschaltete Wechselspannung der zweiten Sekundärwicklung (SW2) mit dem einen Pol auf den gemeinsamen Werkstückanschluß (bo, Masse) und dem anderen Pol über zusätzliche Kontakte (a 1.10 und a 1.11) des Betriebsartwahlschalters (BWS) wahlweise auf den Schweißstromanschluß (b2, WIG) für den WIG-Schweißbrenner oder den Schweißstromanschluß (b3, E) für den Elektroden-Schweißbrenner durchschaltbar ist, und

daß in der Gleichstrom-Schaltstellung des Stromartwahlschalters (SWS) die über Kontakte (a 1.5 und a 1.6) des Betriebsartwahlschalters (BWS) in der zweiten und dritten Arbeitsstellung (Stellung 2 und 3) durchgeschaltete Wechselspannung der zweiten Sekundärwicklung (SW2) auf den Wechselstromeingang des Gleichrichters (GR) schaltbar (a 2.1 und a 2.2) ist, wobei die Durchschaltung zu dem gemeinsamen Werkstückanschluß (bo, Masse) und den Schweißstromanschlüssen (b2, WIG und b3, E) für den WIG-Schweißbrenner und den Elektroden-Schweißbrenner aufhebbar (a 2.4 und a 2.5) ist, der Pluspol (+) der Gleichspannung am Ausgang des Gleichrichters (GR) auf den gemeinsamen Werkstückanschluß (bo, Masse) schaltbar (a 1.7 und a 2.6) ist und der Minuspol (-) der Gleichspannung über die Kon-

- 5 -

takte (a 1.10 und a 1.11) des Betriebsartwahlschalters (BWS) wahlweise auf den Schweißstromanschluß (b2, WIG) für den WIG-Schweißbrenner oder den Schweißstromanschluß (b3, E) für den Elektroden-Schweißbrenner durchschaltbar (a 2.5 und a 1.10 bzw. a 2.5 und a 1.11) ist.

7. Schweißgerät nach einem der Ansprüche 1 bis 6, dadurch gekennzeichnet, daß über weitere Kontakte (a 1.13 bis a 1.15) des Betriebsartwahlschalters (BWS) in der ersten Arbeitsstellung (Stellung 1) die Steuerschaltung (MIG/MAG-ST) für die MIG/MAG-Schweißung, in der zweiten Arbeitsstellung (Stellung 2) die Steuerschaltung (WIG-ST) für die WIG-Steuerung und in der dritten Arbeitsstellung (Stellung 3) die Steuerschaltung (E-ST) für die Elektrodenschweißung einschaltbar sind.

8. Schweißgerät nach Anspruch 7, dadurch gekennzeichnet, daß den Steuerschaltungen (MIG/MAG-ST und WIG-ST) für die MIG/MAG-Schweißung und die WIG-Schweißung die beiden Steuerspulen (GV-I und GV-II) eines Zweiwegventils zugeordnet sind, das in Abhängigkeit von der Einschaltung der Steuerschaltung (MIG/MAG-ST) für die MIG/MAG-Schweißung oder der Steuerschaltung (WIG-ST) für die WIG-Schweißung die Gaszuleitung (GZ) auf den Gasanschluß (GA-MIG/MAG) für den MIG/MAG-Schweißbrenner oder den Gasanschluß (GA-WIG) für den WIG-Schweißbrenner durchschaltet.

- 6 -

9. Schweißgerät nach einem der Ansprüche 1 bis 8, dadurch gekennzeichnet, daß die Reihenschaltung aus Thyristor-Steuerschaltung (TYST) und Primärwicklung (PW) des Netztransformators (NTR) über Kontakte (C1.1 und C1.2) eines Hauptschützes an die Versorgungswechselspannung (RS) anschaltbar ist und daß dieser Hauptschütz in den Arbeitsstellungen (Stellungen 1, 2 und 3) des Betriebsartwahlschalters (BWS) direkt und/oder über die darüber angesteuerten Steuerschaltungen (MIG/MAG-ST, WIG-ST, E-ST) für die verschiedenen Schweißarten einschaltbar ist.

10. Schweißgerät nach einem der Ansprüche 1 bis 9, dadurch gekennzeichnet, daß die Schweißstromanschlüsse (b1, MIG/MAG; b2, WIG; b3, E) für die Schweißbrenner als Steckanschlüsse ausgebildet sind und daß die Schweißbrenner mittels den zugeordneten Gegensteckelementen lösbar mit dem Schweißgerät verbindbar sind.

11. Schweißgerät nach Anspruch 10, dadurch gekennzeichnet, daß die Steckanschlüsse für die verschiedenen Schweißbrenner unverwechselbar ausgebildet sind.

BWS – a1.1 bis a1.15

SWS – a2.1 bis a2.6

Fig.1

TYST

TY1  TY2

PAST

SWG

Fig.2

STR

$0$  a1.15  E-ST
$1$
$2$
$3$

$0$  a1.14  WIG-ST
$1$
$2$
$3$  GV-II

$0$  a1.13  MIG/MAG-ST
$1$
$2$
$3$  GV-I

Fig.3

3/3

0001815

2 ——— GA-WIG

——— g''

1 ——— GA-MIG/MAG

3/3

0001815

Fig.4

Fig.5

**Europäisches Patentamt**

## EUROPÄISCHER RECHERCHENBERICHT

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | B 23 K 9/10 |
| | DE - A - 2 352 249 (UNION CARBIDE) <br> * Seiten 8,9 * | 1,2,4, 6-8 | |
| | -- | | |
| | US - A - 2 757 296 (WESTINGHOUSE) <br> * Spalte 1, Zeilen 17-50; Figuren 1,2 * | 1,6 | |
| | -- | | |
| | GB - A - 871 934 (JENKINSON) <br> * Seite 1, Zeile 91 - Seite 2, Zeile 17 * | 4,5 | |
| | -- | | **RECHERCHIERTE SACHGEBIETE (Int. Cl.²)** |
| | CH - A - 467 645 (SIEMENS) <br> * Spalte 7, Zeile 20 - Spalte 8, Zeile 29 * <br> & NL - A - 66 02571 <br> FR - A - 1 478 716 <br> BE - A - 679 781 <br> DE - 1 565 060 | 1,3,5 | B 23 K 9/10 |
| | -- | | |
| | FR - A - 2 191 972 (HILTI) <br> * Seite 7, Zeilen 20-26 * | 10 | |
| | -- | | |
| A | FR - A - 2 333 609 (PATONA) <br> * Seite 12 * | 1 | |
| | -- | | |
| A | FR - A - 2 331 413 (BEAUDOUX) <br> * Seite 5 * | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-02-1979 | HOORNAERT |

EPA form 1503.1 06.78